# EUROPEAN PATENT SPECIFICATION

(11) **EP 4 318 074 B1**
(45) Date of publication and mention of the grant of the patent: **09.04.2025**
(21) Application number: 22774559.3
(22) Date of filing: 12.01.2022
(51) Int. Cl.: G02B 26/10, G02B 26/08, G09G 3/02, G02B 26/12

(54) **CONTROL DEVICE, IMAGE FORMING DEVICE, AND CONTROL METHOD**
STEUERUNGSVORRICHTUNG, BILDERZEUGUNGSVORRICHTUNG UND STEUERUNGSVERFAHREN
DISPOSITIF DE COMMANDE, DISPOSITIF DE FORMATION D'IMAGE ET PROCÉDÉ DE COMMANDE

(30) Priority: 25.03.2021 JP 2021051663
(43) Date of publication of application: 07.02.2024
(73) Proprietor: FUJIFILM Corporation, Tokyo 106-8620 (JP)
(72) Inventor: TANAKA, Nobuya, Ashigarakami-gun, Kanagawa 258-8577 (JP); SONODA, Shinichiro, Ashigarakami-gun, Kanagawa 258-8577 (JP)
(74) Representative: HGF
(86) International application number: PCT/JP2022/000785
(87) International publication number: WO 2022/201754

(56) References cited:
- CN-A- 109 752 839
- CN-A- 111 722 238
- JP-A- 2012 247 534
- US-A1- 2011 261 428
- US-A1- 2020 314 395

## Description

### BACKGROUND OF THE INVENTION

### 1. Field of the Invention

The disclosed technology relates to a control device, an image forming apparatus, and a control method.

### 2. Description of the Related Art

A light scanning device that performs Lissajous scanning by irradiating a movable mirror which swings about two orthogonal axes, with light which is subjected to intensity modulation in accordance with an input image has been known. The movable mirror is resonantly driven by two sine waves having different frequencies. In the Lissajous scanning, the movable mirror is resonantly driven about the two axes. Thus, a deflection angle is large, and an advantage of increasing a scanning range of light is achieved.

In a case where the input image is drawn by the light scanning device, it is required to periodically perform light scanning in accordance with a frame period of the input image. JP2016-014749A discloses providing an origin signal generation portion that generates an origin signal for defining a period of the Lissajous scanning, and driving the movable mirror and controlling a light emission timing of a light emitting device based on the origin signal generated by the origin signal generation portion.

### SUMMARY OF THE INVENTION

However, in a case of performing the Lissajous scanning using the origin signal as disclosed in JP2016-014749A, a deviation may occur between an origin position (for example, a center of the scanning range) indicated by the origin signal within the scanning range and an actual scanning position in a case where the origin signal generation portion has generated the origin signal. In a case where a deviation occurs between the origin position and the actual scanning position, a deviation occurs between the period of the Lissajous scanning and the light emission timing, and distortion occurs in the drawn image. In the Lissajous scanning, light is scanned to draw a complicated Lissajous curve unlike that in general raster scanning. Thus, in a case where a deviation occurs between the scanning period and the light emission timing, significant distortion occurs in the drawn image. Further prior art is known from US 2020/314395.

An object of the disclosed technology is to provide a control device, an image forming apparatus, and a control method that can suppress a deviation between a scanning period and a light emission timing.

In order to achieve the object, a control device according to an aspect of the present disclosure is a control device that controls a light scanning device which performs Lissajous scanning of light by irradiating a movable mirror which swings about a first axis and about a second axis, with light which is subjected to intensity modulation in accordance with an input image, the control device comprising a first measurement portion that measures, as a first elapsed time, an elapsed time from a first reference point at which a deflection angle of the movable mirror about the first axis becomes equal to a first reference angle, a second measurement portion that measures, as a second elapsed time, an elapsed time from a second reference point at which a deflection angle of the movable mirror about the second axis becomes equal to a second reference angle, an information storage portion in which intensity information representing a correspondence relationship between the first elapsed time and the second elapsed time, and a signal intensity of the input image is stored, a readout portion that reads out the signal intensity corresponding to the first elapsed time measured by the first measurement portion and to the second elapsed time measured by the second measurement portion from the information storage portion, and a light emission control portion that causes a light emitting device to perform the intensity modulation of the light based on the signal intensity read out by the readout portion.

It is preferable that the first measurement portion and the second measurement portion measure the first elapsed time and the second elapsed time, respectively, by counting a clock signal output from a clock generator.

It is preferable that the control device further comprises a first reference point detection portion that detects the first reference point, and a second reference point detection portion that detects the second reference point.

It is preferable that the light scanning device includes a first angle sensor that outputs a first angle signal corresponding to the deflection angle of the movable mirror about the first axis, and a second angle sensor that outputs a second angle signal corresponding to the deflection angle of the movable mirror about the second axis, the first reference point detection portion detects the first reference point based on the first angle signal output from the first angle sensor, and the second reference point detection portion detects the second reference point based on the second angle signal output from the second angle sensor.

It is preferable that the intensity information represents a correspondence relationship between a combination of the first elapsed time and the second elapsed time, and the signal intensity of the input image.

It is preferable that the control device further comprises a scanning path changing portion that changes a scanning path of the Lissajous scanning by changing a frequency of at least one of the swing of the movable mirror about the first axis or the swing of the movable mirror about the second axis.

It is preferable that the control device further comprises a scanning path changing portion that changes a scanning path of the Lissajous scanning by changing a phase difference between the swing of the movable mirror about the first axis and the swing of the movable mirror about the second axis.

It is preferable that the control device further comprises a scanning path changing portion that changes a scanning path of the Lissajous scanning by changing an amplitude of at least one of the swing of the movable mirror about the first axis or the swing of the movable mirror about the second axis.

It is preferable that the control device further comprises a scanning path changing portion that changes a scanning path of the Lissajous scanning based on a combination of at least two of changing a frequency of at least any one of the swing of the movable mirror about the first axis or the swing of the movable mirror about the second axis, changing a phase difference between the swing of the movable mirror about the first axis and the swing of the movable mirror about the second axis, and changing an amplitude of at least any one of the swing of the movable mirror about the first axis or the swing of the movable mirror about the second axis.

It is preferable that a scanning period of the Lissajous scanning is longer than a frame period of the input image.

An image forming apparatus according to another aspect of the present disclosure comprises any of the control devices, a light scanning device, and a light emitting device.

A control method according to still another aspect of the present disclosure is a control method of controlling a light scanning device which performs Lissajous scanning of light by irradiating a movable mirror which swings about a first axis and about a second axis, with light which is subjected to intensity modulation in accordance with an input image, the control method comprising first measurement processing of measuring, as a first elapsed time, an elapsed time from a first reference point at which a deflection angle of the movable mirror about the first axis becomes equal to a first reference angle, second measurement processing of measuring, as a second elapsed time, an elapsed time from a second reference point at which a deflection angle of the movable mirror about the second axis becomes equal to a second reference angle, readout processing of reading out, from an information storage portion in which intensity information representing a correspondence relationship between the first elapsed time and the second elapsed time, and a signal intensity of the input image is stored, the signal intensity corresponding to the first elapsed time measured by the first measurement processing and to the second elapsed time measured by the second measurement processing, and light emission control processing of causing a light emitting device to perform the intensity modulation of the light based on the signal intensity read out by the readout processing.

According to the disclosed technology, it is possible to provide a control device, an image forming apparatus, and a control method that can suppress a deviation between a scanning period and a light emission timing.

### BRIEF DESCRIPTION OF THE DRAWINGS

Fig. 1 is a schematic diagram illustrating an example of a configuration of an image forming apparatus according to a first embodiment.
Fig. 2 is a schematic perspective view illustrating an example of a configuration of a MEMS mirror.
Fig. 3 is a block diagram illustrating an example of a functional configuration of a control device.
Fig. 4 is a diagram for describing examples of reference point detection processing and measurement processing.
Fig. 5 is a diagram illustrating an example of a plurality of partial regions into which a scanning region is divided.
Fig. 6 is a diagram illustrating an example of a unit region.
Fig. 7 is a diagram illustrating an example of the scanning region represented by the unit regions.
Fig. 8 is a diagram illustrating an example of a signal intensity constituting image data.
Fig. 9 is a diagram illustrating an example of intensity information.
Fig. 10 is a diagram illustrating an example of readout processing.
Fig. 11 is a diagram illustrating an example in which two or more lines constituting a Lissajous curve intersect with each of the partial regions.
Fig. 12 is a diagram illustrating an example in which four lines intersect with the partial region.
Fig. 13 is a diagram illustrating an example in which an inclined projection surface is scanned with laser light.
Fig. 14 is a block diagram illustrating an example of a functional configuration of a control device according to a second embodiment.
Fig. 15 is a diagram for describing a first example of changing a frequency ratio.
Fig. 16 is a diagram for describing a second example of changing a phase difference.
Fig. 17 is a diagram for describing a third example of changing an amplitude.
Fig. 18 is a diagram for describing a third embodiment in which a scanning period is set to be longer than a frame period.
Fig. 19 is a block diagram illustrating an example of a functional configuration of a control device according to a fourth embodiment.

### DESCRIPTION OF THE PREFERRED EMBODIMENTS

Hereinafter, embodiments according to the disclosed technology will be described in detail with reference to the drawings. As an example, in each of the following embodiments, the disclosed technology will be described in the form of being applied to an image forming apparatus that forms an image on a projection surface by scanning laser light using a Lissajous method.

### [First Embodiment]

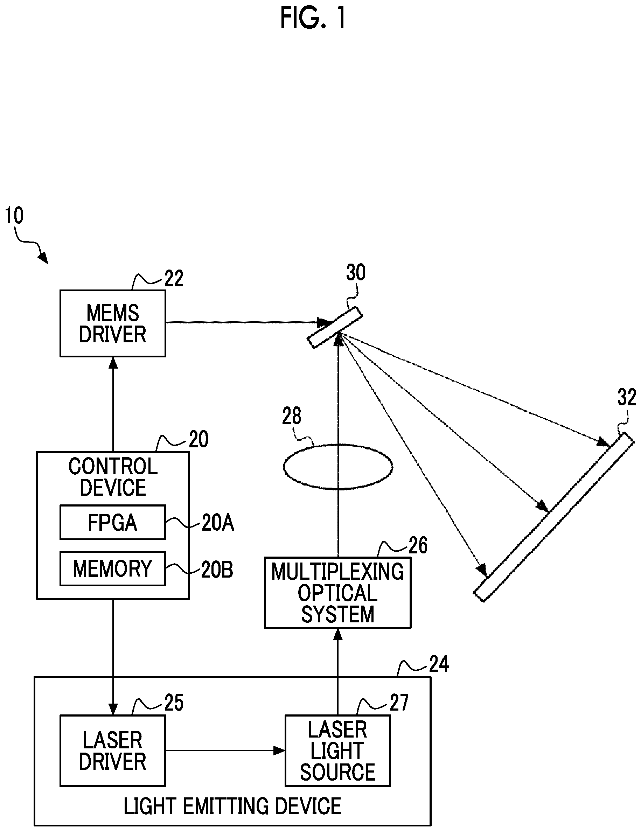

Fig. 1 illustrates an example of a configuration of an image forming apparatus 10 of the present embodiment. As illustrated in Fig. 1, the image forming apparatus 10 of the present embodiment comprises a control device 20, a micro electro mechanical systems (MEMS) driver 22, a light emitting device 24, a multiplexing optical system 26, a collimator 28, and a MEMS mirror 30. The MEMS mirror 30 is an example of a "light scanning device" according to the embodiment of the disclosed technology.

The light emitting device 24 includes a laser driver 25 and a laser light source 27. The laser driver 25 of the present embodiment outputs laser light for forming an image from the laser light source 27 by driving the laser light source 27 based on an intensity modulation signal supplied from the control device 20. For example, the laser light source 27 outputs the laser light of three colors of red (R), green (G), and blue (B).

The laser light output from the laser light source 27 is multiplexed by the multiplexing optical system 26. Then, the MEMS mirror 30 is irradiated with the multiplexed laser light through the collimator 28. The laser light condensed in the MEMS mirror 30 is reflected toward a projection surface 32 by the MEMS mirror 30. For example, the projection surface 32 is a screen for projecting the image, or a retina of an eye of a person. That is, the image forming apparatus 10 of the present embodiment is used for a projector, augmented reality (AR) glasses, and the like.

In the present embodiment, the projection surface 32 is not limited to a surface of an actual object such as the screen and includes an imaginary plane in a space.

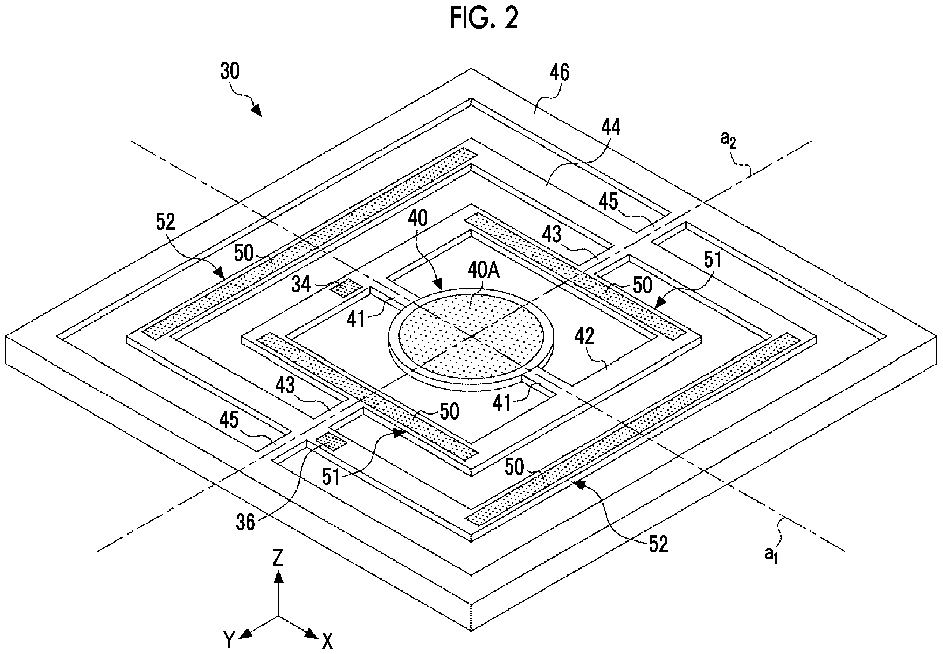

The MEMS driver 22 drives the MEMS mirror 30 under control of the control device 20. In the MEMS mirror 30, a mirror portion 40 (refer to Fig. 2) that reflects the laser light independently swings about each of two axes orthogonal to each other as a central axis. In the present embodiment, the laser light is scanned in a state of drawing a Lissajous curve on the projection surface 32 by the swing of the mirror portion 40 based on a driving signal. The Lissajous curve is a curve that is determined by a swing frequency about a first axis, a swing frequency about a second axis, and a phase difference therebetween. The mirror portion 40 is an example of a "movable mirror" according to the embodiment of the disclosed technology.

The control device 20 of the present embodiment includes a field programmable gate array (FPGA) 20A and a memory 20B. For example, the memory 20B is a volatile memory and stores various information such as an image signal representing the image projected to the projection surface 32. For example, the memory 20B stores the image signal input from an outside of the image forming apparatus 10.

Fig. 2 illustrates an example of a configuration of the MEMS mirror 30. The MEMS mirror 30 includes the mirror portion 40, a first support portion 41, a first movable frame 42, a second support portion 43, a second movable frame 44, a connecting portion 45, and a fixed frame 46.

The mirror portion 40 has a reflecting surface 40A on which an incidence ray is reflected. For example, the reflecting surface 40A is formed with a thin metal film of gold (Au), aluminum (Al), silver (Ag), or a silver alloy. For example, a shape of the reflecting surface 40A is a circular shape.

The first support portion 41 is disposed outside the mirror portion 40 at each of positions that face each other with a second axis a₂ interposed therebetween. The first support portions 41 are connected to the mirror portion 40 on a first axis a₁ and support the mirror portion 40 in a swingable manner about the first axis a₁.

The first movable frame 42 is a rectangular frame surrounding the mirror portion 40 and is connected to the mirror portion 40 through the first support portions 41 on the first axis a₁. A piezoelectric element 50 is formed on the first movable frame 42 at each of positions that face each other with the first axis a₁ interposed therebetween. In such a manner, a pair of first actuators 51 are configured by forming two piezoelectric elements 50 on the first movable frame 42.

The pair of first actuators 51 are disposed at positions that face each other with the first axis a₁ interposed therebetween. The first actuators 51 cause the mirror portion 40 to swing about the first axis a₁ by applying rotational torque about the first axis a₁ to the mirror portion 40.

The second support portion 43 is disposed outside the first movable frame 42 at each of positions that face each other with the first axis a₁ interposed therebetween. The second support portions 43 are connected to the first movable frame 42 on the second axis a₂ and support the first movable frame 42 and the mirror portion 40 in a swingable manner about the second axis a₂. In the present embodiment, the second support portions 43 are torsion bars that stretch along the second axis a₂.

The second movable frame 44 is a rectangular frame surrounding the first movable frame 42 and is connected to the first movable frame 42 through the second support portions 43 on the second axis a₂. The piezoelectric element 50 is formed on the second movable frame 44 at each of positions that face each other with the second axis a₂ interposed therebetween. In such a manner, a pair of second actuators 52 are configured by forming two piezoelectric elements 50 on the second movable frame 44.

The pair of second actuators 52 are disposed at positions that face each other with the second axis a₂ interposed therebetween. The second actuators 52 cause the mirror portion 40 to swing about the second axis a₂ by applying rotational torque about the second axis a₂ to the mirror portion 40 and to the first movable frame 42.

The connecting portion 45 is disposed outside the second movable frame 44 at each of positions that face each other with the first axis a₁ interposed therebetween. The connecting portions 45 are connected to the second movable frame 44 on the second axis a₂.

The fixed frame 46 is a rectangular frame surrounding the second movable frame 44 and is connected to the second movable frame 44 through the connecting portions 45 on the second axis a₂.

In addition, the first movable frame 42 is provided with a first angle sensor 34 near the first support portion 41. The first angle sensor 34 is composed of a piezoelectric element and outputs a signal by converting a force applied by deformation of the first support portion 41 caused by the swing of the mirror portion 40 about the first axis a₁ into a voltage. That is, the first angle sensor 34 outputs a signal (hereinafter, referred to as a first angle signal) SA1 representing a deflection angle of the mirror portion 40 about the first axis a₁. The first angle signal SA1 is a sine wave having a swing frequency of the mirror portion 40 about the first axis a₁.

In addition, the second movable frame 44 is provided with a second angle sensor 36 near the second support portion 43. The second angle sensor 36 is composed of a piezoelectric element and outputs a signal by converting a force applied by deformation of the second support portion 43 caused by the swing of the mirror portion 40 about the second axis a₂ into a voltage. That is, the second angle sensor 36 outputs a signal (hereinafter, referred to as a second angle signal) SA2 representing a deflection angle of the mirror portion 40 about the second axis a₂. The second angle signal SA2 is a sine wave having a swing frequency of the mirror portion 40 about the second axis a₂.

In the present embodiment, the first axis a₁ and the second axis a₂ are orthogonal to each other. In the following description, a direction parallel to the first axis a₁ will be referred to as an X direction, a direction parallel to the second axis a₂ will be referred to as a Y direction, and a direction orthogonal to the first axis a₁ and to the second axis a₂ will be referred to as a Z direction.

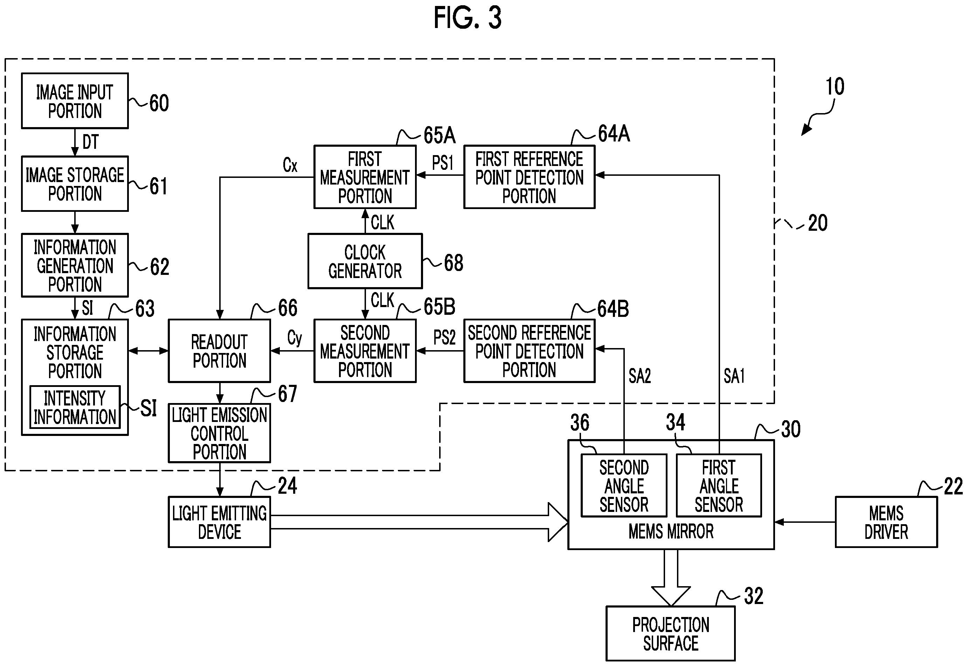

Fig. 3 illustrates an example of a functional configuration of the control device 20. As illustrated in Fig. 3, the control device 20 is composed of an image input portion 60, an image storage portion 61, an information generation portion 62, an information storage portion 63, a first reference point detection portion 64A, a second reference point detection portion 64B, a first measurement portion 65A, a second measurement portion 65B, a readout portion 66, and a light emission control portion 67. These functional portions are implemented by operating the FPGA 20A and the memory 20B in cooperation with each other.

Image data DT that represents the image to be formed is input into the image input portion 60 from the outside. Hereinafter, the image corresponding to the image data DT input into the image input portion 60 may be referred to as an input image. As an example, in the present embodiment, the image data DT of colors represented by RGB signals is input into the image input portion 60. The image data DT input into the image input portion 60 is output to the image storage portion 61. The image storage portion 61 is a memory that stores the image data DT output from the image input portion 60. The image data DT input into the image input portion 60 is not limited to the present embodiment and may be data corresponding to the image to be formed. For example, the data may be binarized data that represents whether or not to output the laser light. In addition, for example, the image data DT may be data that represents multiple values of an output intensity.

The information generation portion 62 generates intensity information SI representing a correspondence relationship between a first count value Cx and a second count value Cy, described later, and a signal intensity of the input image. In a case where the input image is a color image, the signal intensity represents an intensity of each of the RGB signals. The information storage portion 63 is a memory that stores the intensity information SI generated by the information generation portion 62. The first count value Cx is an example of a "first elapsed time" according to the present embodiment. The second count value Cy is an example of a "second elapsed time" according to the present embodiment.

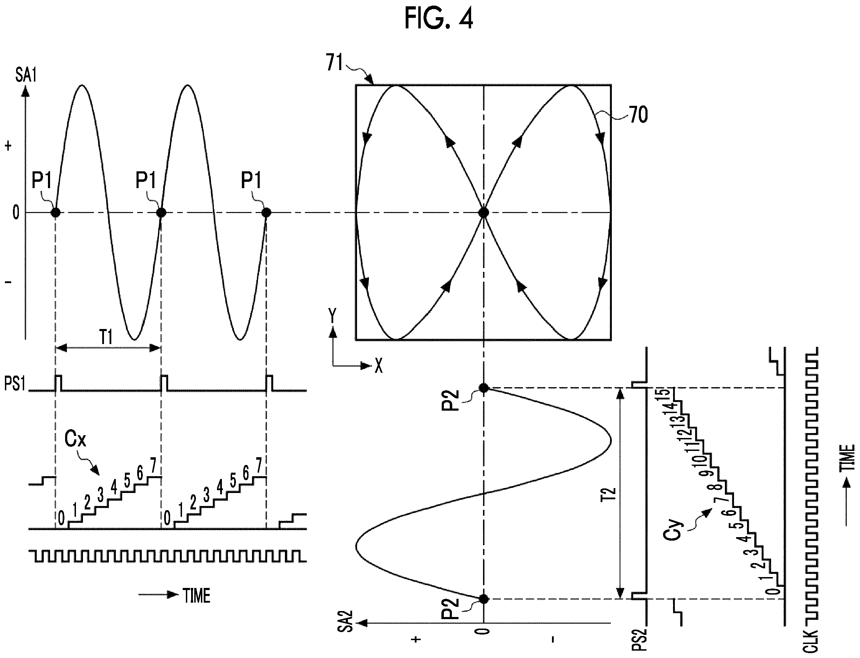

As illustrated in Fig. 4, the first reference point detection portion 64A detects a first reference point P1 based on the first angle signal SA1 output from the first angle sensor 34. The first reference point P1 is a time at which the deflection angle of the mirror portion 40 about the first axis a₁ becomes equal to a first reference angle θ1. In the present embodiment, the first reference angle θ1 is set to 0°. The first reference angle θ1 is not limited to 0° and may be an angle at which the deflection angle has a maximum value or a minimum value.

The first reference point detection portion 64A generates a pulse signal PS1 in accordance with detection of the first reference point P1. The pulse signal PS1 in a case of θ1 = 0° is a so-called zero cross signal. In the present embodiment, the first reference point detection portion 64A detects, as the first reference point P1, a time at which the deflection angle of the mirror portion 40 about the first axis a₁ becomes equal to 0° during its change from a negative value to a positive value. The first reference point detection portion 64A outputs the pulse signal PS1 to the first measurement portion 65A.

As illustrated in Fig. 4, the second reference point detection portion 64B detects a second reference point P2 based on the second angle signal SA2 output from the second angle sensor 36. The second reference point P2 is a time at which the deflection angle of the mirror portion 40 about the second axis a₂ becomes equal to a second reference angle θ2. In the present embodiment, the second reference angle θ2 is set to 0°. The second reference angle θ2 is not limited to 0° and may be an angle at which the deflection angle has a maximum value or a minimum value.

The second reference point detection portion 64B generates a pulse signal PS2 in accordance with detection of the second reference point P2. The pulse signal PS2 in a case of θ2 = 0° is a so-called zero cross signal. In the present embodiment, the second reference point detection portion 64B detects, as the second reference point P2, a time at which the deflection angle of the mirror portion 40 about the second axis a₂ becomes equal to 0° during its change from a negative value to a positive value. The second reference point detection portion 64B outputs the pulse signal PS2 to the second measurement portion 65B.

The first measurement portion 65A performs first measurement processing of measuring an elapsed time from the first reference point P1 detected by the first reference point detection portion 64A as the first count value Cx. Similarly, the second measurement portion 65B performs second measurement processing of measuring an elapsed time from the second reference point P2 detected by the second reference point detection portion 64B as the second count value Cy.

The first measurement portion 65A and the second measurement portion 65B are supplied with a clock signal CLK from a clock generator 68. The clock generator 68 generates the clock signal CLK having a sufficiently shorter clock period than a swing period T1 (hereinafter, referred to as a first swing period T1) of the mirror portion 40 about the first axis a₁ and a swing period T2 (hereinafter, referred to as a second swing period T2) of the mirror portion 40 about the second axis a₂. For example, the clock signal CLK is a system clock signal supplied to each portion in the control device 20.

The first measurement portion 65A uses, as the first count value Cx, a count value obtained by counting up the clock signal CLK from the first reference point P1 based on the pulse signal PS1 output from the first reference point detection portion 64A. The first measurement portion 65A resets the count value to zero for each first swing period T1 in synchronization with the pulse signal PS1.

The second measurement portion 65B uses, as the second count value Cy, a count value obtained by counting up the clock signal CLK from the second reference point P2 based on the pulse signal PS2 output from the second reference point detection portion 64B. The second measurement portion 65B resets the count value to zero for each second swing period T2 in synchronization with the pulse signal PS2.

Each of the first count value Cx measured by the first measurement portion 65A and the second count value Cy measured by the second measurement portion 65B is supplied to the readout portion 66. The readout portion 66 performs readout processing of reading out a signal intensity corresponding to the first count value Cx and the second count value Cy, which are supplied from the first measurement portion 65A and the second measurement portion 65B, from the intensity information SI stored in the information storage portion 63. The readout portion 66 supplies the signal intensity read out from the intensity information SI to the light emission control portion 67.

The light emission control portion 67 performs light emission control processing of causing the light emitting device 24 to perform intensity modulation of the laser light based on the signal intensity supplied from the readout portion 66. Specifically, the intensity modulation is performed by the laser driver 25. The laser light having an intensity corresponding to the signal intensity supplied from the readout portion 66 is output from the laser light source 27. In a case where the input image is a color image, the laser light is subjected to the intensity modulation for each color of RGB.

The first reference point detection portion 64A, the second reference point detection portion 64B, the first measurement portion 65A, the second measurement portion 65B, the readout portion 66, and the light emission control portion 67 operate for each clock period of the clock signal CLK. That is, the laser light is subjected to the intensity modulation for each clock period in accordance with the first count value Cx and with the second count value Cy.

As illustrated in Fig. 4, in the present embodiment, the MEMS driver 22 drives the MEMS mirror 30 such that a ratio of the first swing period T1 and the second swing period T2 is 1:2 (that is, a frequency ratio is 2:1). That is, the frequency ratio of the driving signal provided to the first actuator 51 and to the second actuator 52 is set to 2:1.

In the present embodiment, the laser light emitted from the light emitting device 24 is scanned to draw a Lissajous curve 70 having a shape of an eight centered at an origin K on the projection surface 32 by the MEMS mirror 30. That is, the Lissajous curve 70 represents a scanning path of Lissajous scanning. The origin K is a position at which θ1 = θ2 = 0° is established. In the present embodiment, the frequency ratio of the driving signal is set to 2:1 for simplification of description. The frequency ratio and the phase difference of the driving signal are preferably determined to increase a scanning period TL of the Lissajous scanning and to further densify the Lissajous curve 70. The scanning period TL is the least common multiple of the first swing period T1 and the second swing period T2. In the present embodiment, TL = T2 is established.

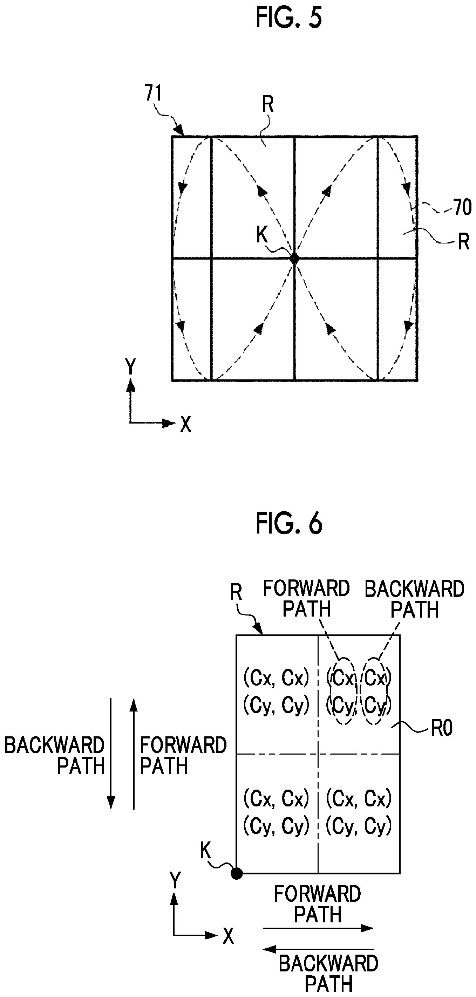

Next, information generation processing performed by the information generation portion 62 will be described using Fig. 5 to Fig. 8. The information generation portion 62 generates the intensity information SI based on a correspondence relationship between a path of the Lissajous curve 70 represented by the first count value Cx and by the second count value Cy and the signal intensity of the input image.

As illustrated in Fig. 5, in the present embodiment, a rectangular scanning region 71 including the Lissajous curve 70 is divided into eight parts. Specifically, the scanning region 71 is divided into four parts in the X direction and into two parts in the Y direction. Each of partial regions R into which the scanning region 71 is divided corresponds to a scanning length of two periods of the clock period in each of the X direction and the Y direction. In the present embodiment, one line constituting the Lissajous curve 70 intersects with each of the partial regions R. For example, in the present embodiment, the image is formed by emitting the laser light after the intensity modulation once in each partial region R. That is, the partial regions R correspond to pixels (drawing units) of the image formed on the projection surface 32.

Each of the partial regions R is defined using the first count value Cx and the second count value Cy. Fig. 6 is a diagram in which the partial region R is divided into a plurality of unit regions R0 in units of clock periods. In the Lissajous scanning, a scanning position reciprocates in each of the X direction and the Y direction. Thus, the scanning position passes through the unit region R0 in four passage directions along a forward path and a backward path with respect to each of the X direction and the Y direction. Here, the forward path refers to a path of movement in a direction away from the origin K, and the backward path refers to a path of movement in a direction toward the origin K.

In (Cx, Cx) illustrated in Fig. 6, Cx on the left side represents the first count value Cx on the forward path, and Cx on the right side represents the first count value Cx on the backward path. Similarly, in (Cy, Cy), Cy on the left side represents the second count value Cy on the forward path, and Cy on the right side represents the second count value Cy on the backward path.

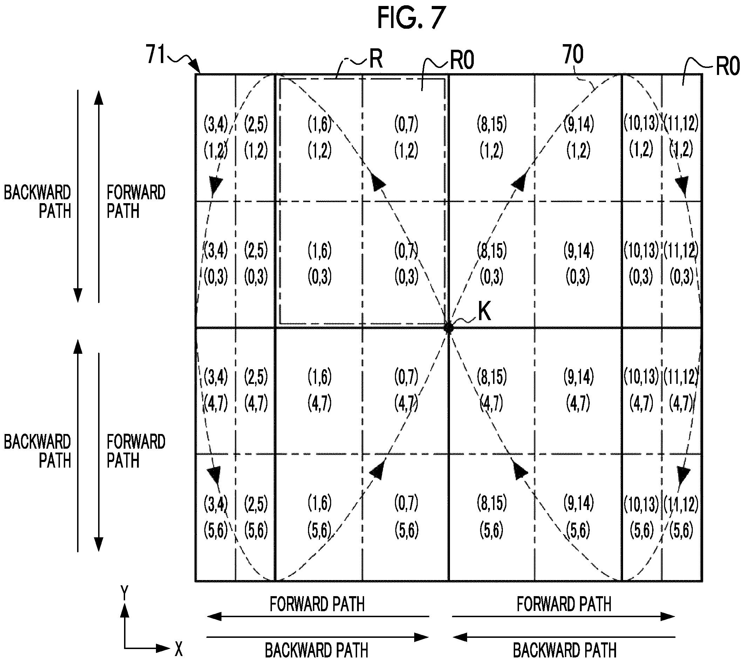

Fig. 7 is a diagram in which each partial region R constituting the scanning region 71 is represented by the plurality of unit regions R0. Each partial region R is represented using the first count value Cx and the second count value Cy. Out of two parentheses shown in each partial region R, the parenthesis in the upper part represents (Cx, Cx), and the parenthesis in the lower part represents (Cy, Cy).

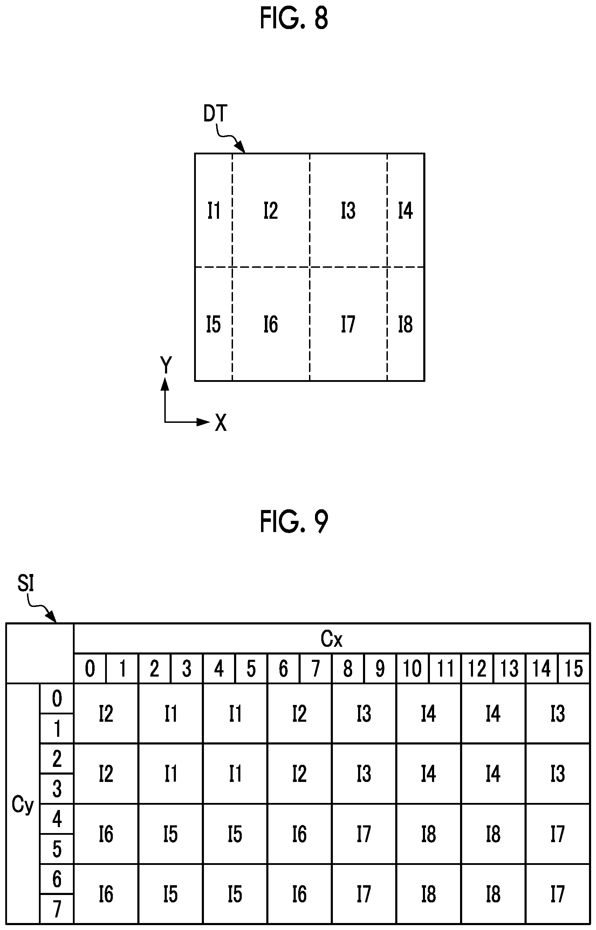

Fig. 8 illustrates an example of a signal intensity I constituting the image data DT. The information generation portion 62 divides the image data DT as the input image into parts that correspond to each partial region R constituting the scanning region 71. Next, the information generation portion 62 obtains the signal intensity I for each divided region into which the image data DT is divided. For example, the signal intensity I is obtained by averaging a plurality of pixel signals included in the divided region for each color of RGB. The signal intensity I represents the intensity of each of RGB signals. In the present embodiment, eight signal intensities I1 to I8 are obtained from the image data DT.

Fig. 9 illustrates an example of the intensity information SI. The information generation portion 62 generates the intensity information SI by associating the signal intensity I with the first count value Cx and with the second count value Cy. In the present embodiment, the information generation portion 62 generates the intensity information SI by associating each of the signal intensities I1 to I8 obtained from the image data DT with the first count value Cx and the second count value Cy of the corresponding partial region R.

The intensity information SI is represented as a matrix table having the first count value Cx and the second count value Cy as parameters and holds the signal intensity I corresponding to all combinations of the first count value Cx and the second count value Cy. Thus, the intensity information SI can be used in common even in a case where a relationship between the first reference point P1 and the second reference point P2 changes and where the phase difference between the first angle signal SA1 and the second angle signal SA2 changes.

In a case where the image data DT is video data composed of a plurality of frames, the information generation portion 62 may change the signal intensity I in the intensity information SI for each frame in accordance with an image represented by each frame. In the present embodiment, a frame period TF and the scanning period TL are set to be the same.

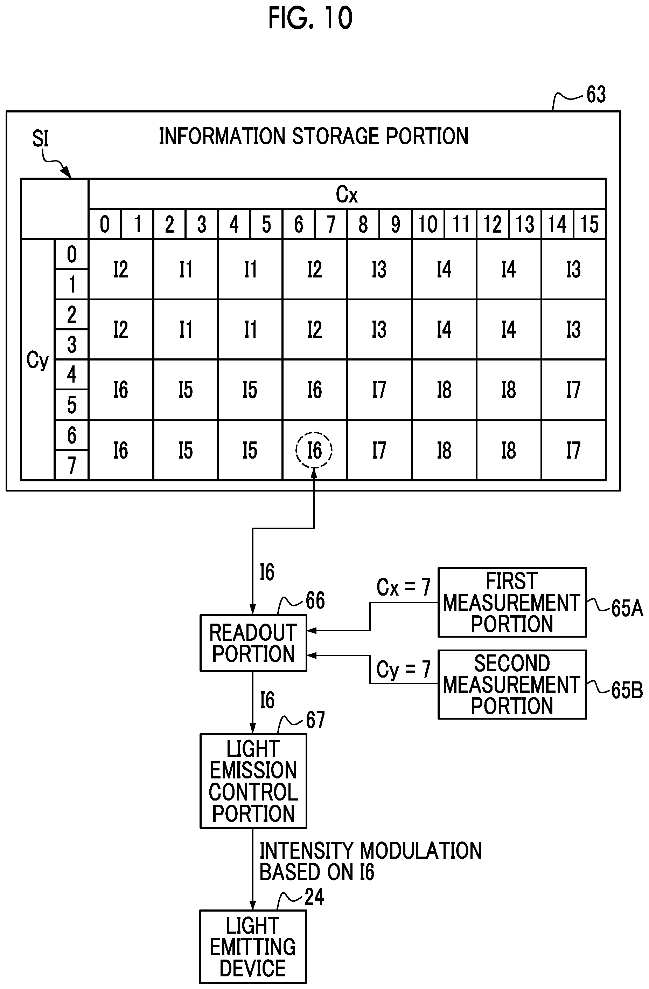

Fig. 10 illustrates an example of the readout processing performed by the readout portion 66. The first count value Cx and the second count value Cy are input into the readout portion 66 from the first measurement portion 65A and from the second measurement portion 65B for each clock period of the clock signal CLK. Fig. 10 illustrates a case where each of the first count value Cx and the second count value Cy input into the readout portion 66 is "7". In this case, the readout portion 66 reads out the signal intensity I6 from the intensity information SI stored in the information storage portion 63 as the signal intensity I corresponding to Cx = 7 and to Cy = 7.

The light emission control portion 67 causes the light emitting device 24 to perform the intensity modulation of the laser light based on the signal intensity I6 read out by the readout portion 66.

As described above, the control device 20 measures, as the first count value Cx (first elapsed time), the elapsed time from the first reference point P1 at which the deflection angle of the mirror portion 40 about the first axis a₁ becomes equal to the first reference angle θ1, and measures, as the second count value Cy (second elapsed time), the elapsed time from the second reference point P2 at which the deflection angle of the mirror portion 40 about the second axis a₂ becomes equal to the second reference angle θ2. The control device 20 acquires the signal intensity I corresponding to the measured first count value Cx and to the measured second count value Cy from the intensity information SI and causes the light emitting device 24 to perform the intensity modulation of the laser light.

Accordingly, the control device 20 is not required to generate an origin signal for defining the scanning period TL of the Lissajous scanning unlike that in the related art. The scanning period TL may change because of effects of rotational moment of the mirror portion 40, gravity, atmospheric pressure, and the like. However, according to the disclosed technology, since a light emission timing is controlled based on the first elapsed time and on the second elapsed time without using the origin signal, a deviation between the scanning period TL and the light emission timing can be suppressed even in a case where the scanning period changes.

In addition, the control device 20 measures the first elapsed time and the second elapsed time independently of each other. Thus, according to the disclosed technology, it is possible to perform robust image formation that is not affected by a change in the phase difference between the swing of the mirror portion 40 about the first axis a₁ and the swing of the mirror portion 40 about the second axis a₂. In addition, according to the disclosed technology, since it is not required to correct the driving signal to maintain the phase difference to be constant, the swing frequency, the frequency ratio, the phase difference, or an amplitude about the two axes can be dynamically changed even in the middle of the Lissajous scanning. Accordingly, a resolution, a frame rate, an angle of view, a light quantity, and the like of the image formed on the projection surface 32 can be dynamically switched.

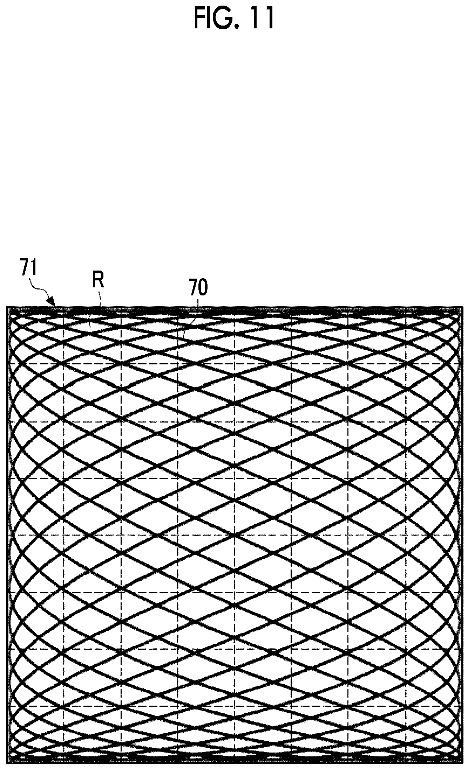

While the MEMS driver 22 drives the MEMS mirror 30 such that the scanning position of the laser light draws the Lissajous curve 70 having a shape of an eight in the embodiment, the MEMS mirror 30 may be driven to draw the Lissajous curve 70 that is denser as illustrated in Fig. 11 as an example. Densifying the Lissajous curve 70 can increase the resolution of the image formed on the projection surface 32.

In addition, while the scanning region 71 is divided such that one line constituting the Lissajous curve 70 intersects with each of the partial regions R in the embodiment, the scanning region 71 may be divided such that two or more lines constituting the Lissajous curve 70 intersect with each of the partial regions R. In the example illustrated in Fig. 11, two or more lines constituting the Lissajous curve 70 intersect with each of the partial regions R.

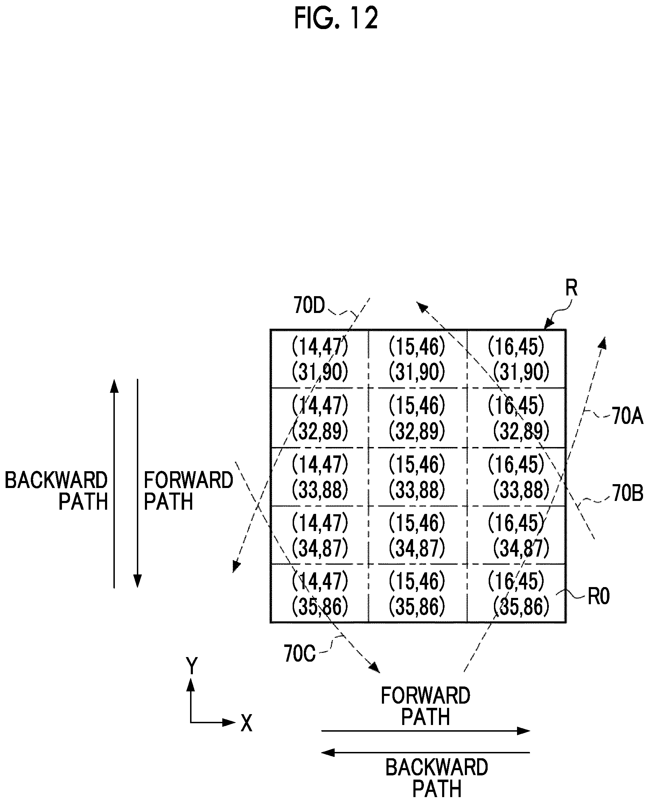

Fig. 12 illustrates an example in which four lines 70A to 70D intersect with the partial region R. The four lines 70A to 70D illustrated in Fig. 12 constitute one Lissajous curve 70 as a whole. In this case, the intensity modulation of the laser light is performed with the same signal intensity I in a case where the scanning position passes through the partial region R illustrated in Fig. 12 along each of the four lines 70A to 70D.

Specifically, the intensity modulation of the laser light is performed with the same signal intensity I within a time range of Cx = 16 and 86 ≤ Cy ≤ 88 through which the scanning position passes along the line 70A, a time range of 45 ≤ Cx ≤ 46 and 88 ≤ Cy ≤ 90 through which the scanning position passes along the line 70B, a time range of Cx = 14 and 34 ≤ Cy ≤ 35 through which the scanning position passes along the line 70C, and a time range of Cx = 47 and 31 ≤ Cy ≤ 33 through which the scanning position passes along the line 70D.

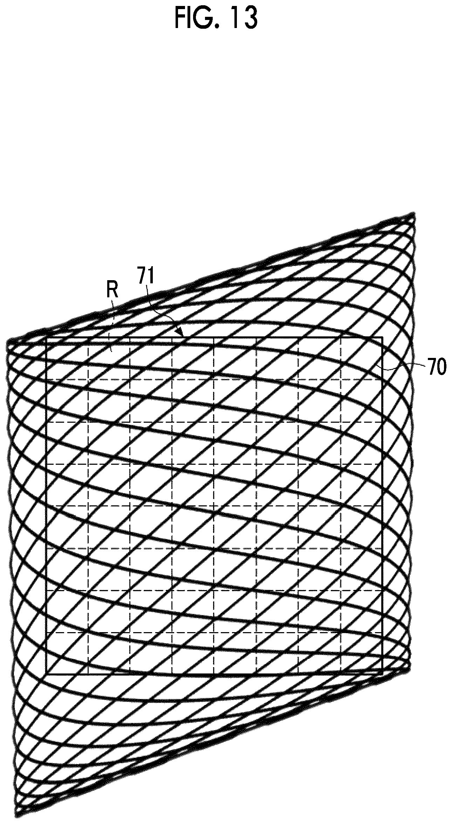

In addition, while a case where the laser light is scanned perpendicular to the planar projection surface 32 is assumed in the embodiment, the projection surface 32 that is inclined is also considered. In this case, the Lissajous curve 70 drawn by the laser light scanned to the projection surface 32 deforms as illustrated in Fig. 13 as an example. In a case where the Lissajous curve 70 deforms, the information generation portion 62 may generate the intensity information SI based on the deformed Lissajous curve 70.

### [Second Embodiment]

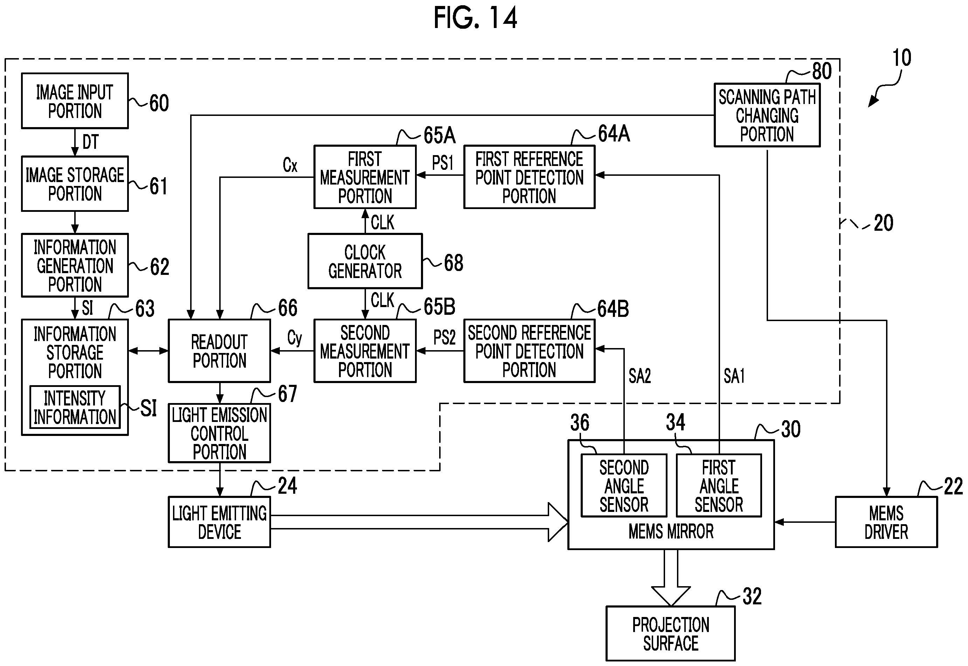

Next, a second embodiment will be described. Fig. 14 illustrates an example of a functional configuration of the control device 20 according to the second embodiment. The functional configuration of the control device 20 according to the second embodiment includes a scanning path changing portion 80 in addition to the functional configuration of the control device 20 according to the first embodiment. The scanning path changing portion 80 changes the scanning path of the Lissajous scanning with the laser light by controlling the driving signal for driving the MEMS mirror 30 via the MEMS driver 22. That is, the scanning path changing portion 80 changes a shape or a size of the Lissajous curve 70.

For example, the scanning path changing portion 80 changes the scanning path for each frame period TF. In this case, the scanning path is switched for each frame period TF, and the current scanning path passes through a region through which the previous scanning path does not pass. Thus, the scanning in the scanning region 71 can be densified. Consequently, the resolution of the image formed on the projection surface 32 is further improved.

The information storage portion 63 stores the intensity information SI corresponding to each of two or more scanning paths changed by the scanning path changing portion 80. The readout portion 66 reads out the signal intensity I from the intensity information SI corresponding to the scanning path changed by the scanning path changing portion 80.

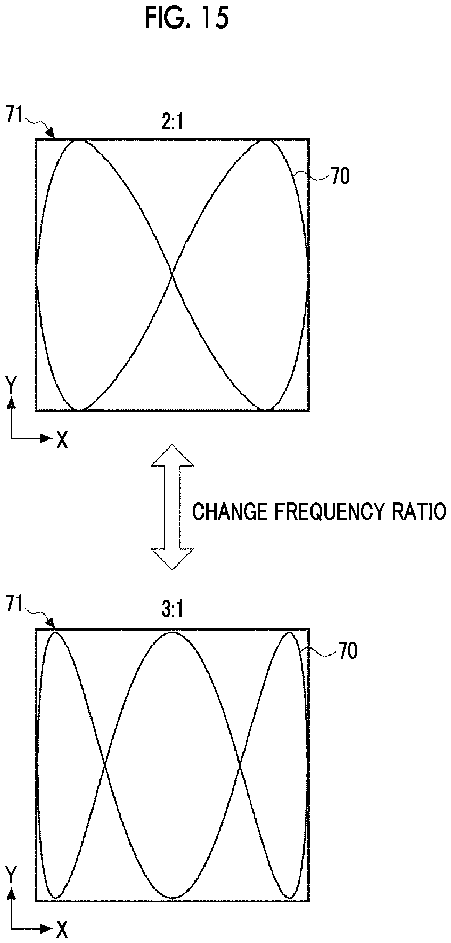

As a first example, the scanning path changing portion 80 changes the scanning path of the Lissajous scanning by changing a frequency of at least one of the swing of the mirror portion 40 about the first axis a₁ or the swing of the mirror portion 40 about the second axis a₂ (that is, by changing the frequency ratio). As illustrated in Fig. 15 as an example, the scanning path changing portion 80 changes the frequency ratio between 2:1 and 3:1. Changing the Lissajous curve 70 in such a manner densifies the scanning in the scanning region 71.

In a case where the frequency ratio is changed as illustrated in Fig. 15, the scanning period TL of the Lissajous scanning changes. Thus, it is also preferable to change the frequency ratio such that the scanning period TL does not change. For example, in a case where the frequency ratio is changed between 3:1 and 1:3, it is possible to change the scanning path while maintaining the scanning period TL to be constant.

In addition, in a case where a change in the scanning path in a case where the frequency ratio is changed is small, it is possible to use the common intensity information SI without changing the intensity information SI.

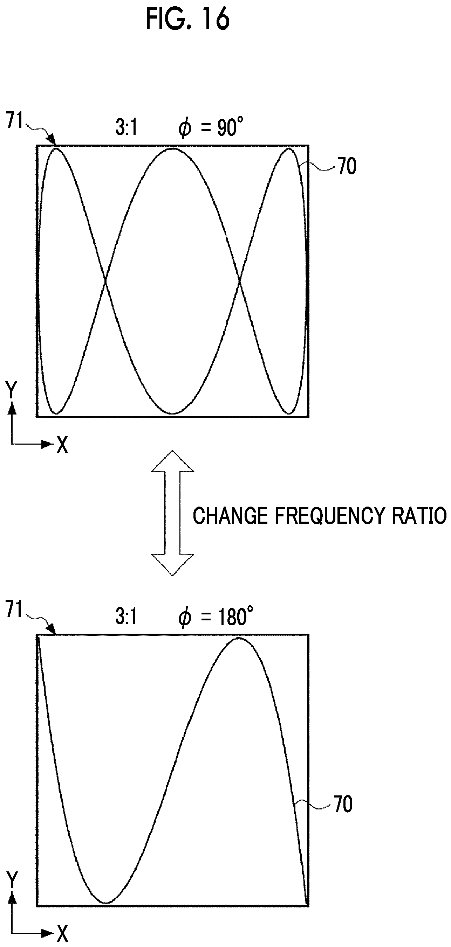

As a second example, the scanning path changing portion 80 changes the scanning path of the Lissajous scanning by changing the phase difference between the swing of the mirror portion 40 about the first axis a₁ and the swing of the mirror portion 40 about the second axis a₂. As illustrated in Fig. 16 as an example, a phase difference ϕ is switched between 90° and 180° while the frequency ratio is maintained at 3:1. Changing the Lissajous curve 70 in such a manner densifies the scanning in the scanning region 71.

In a case of changing the phase difference, it is possible to change the scanning path while maintaining the scanning period TL to be constant. In addition, in a case where only the phase difference is different, it is possible to use the common intensity information SI without changing the intensity information SI as described above.

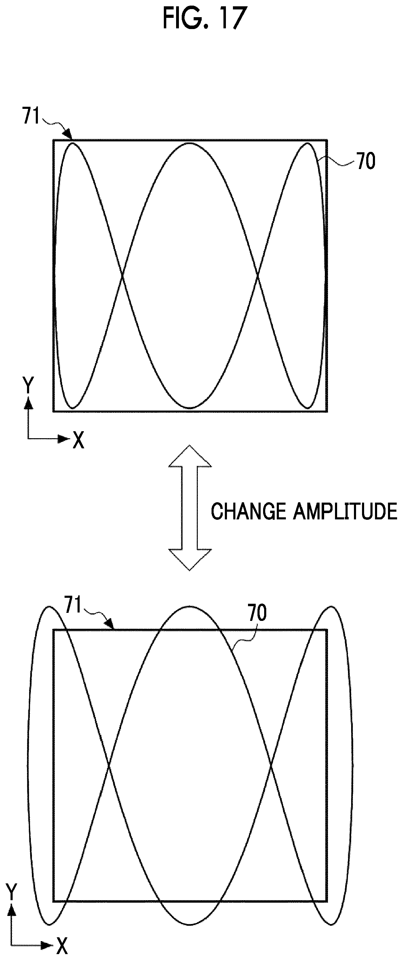

As a third example, the scanning path changing portion 80 changes the scanning path of the Lissajous scanning by changing the amplitude of at least one of the swing of the mirror portion 40 about the first axis a₁ or the swing of the mirror portion 40 about the second axis a₂. As illustrated in Fig. 17 as an example, increasing the amplitude enlarges a scanning range (that is, enlarges the Lissajous curve 70). Changing the Lissajous curve 70 in such a manner densifies the scanning in the scanning region 71.

Since increasing the amplitude enlarges the scanning range, the light quantity per pixel of the image formed on the projection surface 32 is decreased relative to that before the amplitude is increased. Thus, it is preferable to increase the intensity of the laser light to compensate for the decrease in the light quantity caused by increasing the amplitude.

While the scanning path changing portion 80 changes the scanning path between two scanning paths in the examples illustrated in Fig. 15 to Fig. 17, the disclosed technology is not limited thereto, and the scanning path may be changed among three or more scanning paths. In addition, the scanning path changing portion 80 may change the scanning path of the Lissajous scanning based on a combination of two or more of the frequency, the phase difference, and the amplitude.

### [Third Embodiment]

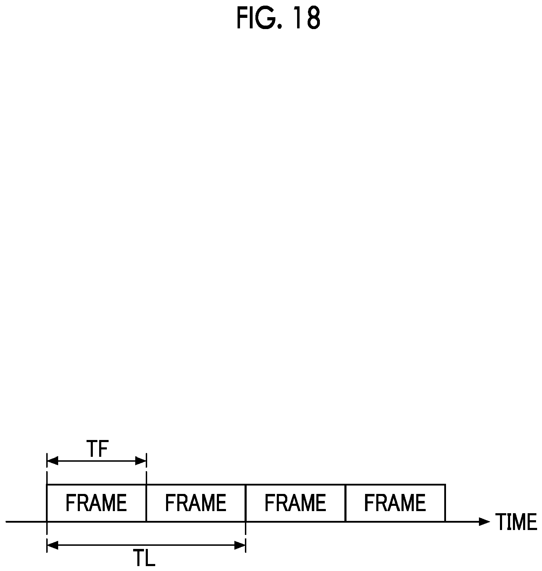

Next, a third embodiment will be described. While the scanning period TL is matched to the frame period TF in the first embodiment, the scanning period TL is set to be longer than the frame period TF (that is, TL > TF) in the third embodiment. As illustrated in Fig. 18 as an example, the scanning period TL is set to be twice the frame period TF (that is, TL = 2 × TF).

In raster scanning, the scanning region is scanned one line at a time. Thus, in a case where TL > TF is set, drawing of the image of one frame ends in the middle of the scanning region. Thus, in a case where TL > TF is set in the raster scanning, the image of one frame cannot be displayed in the entire scanning region.

On the other hand, in the Lissajous scanning, drawing is performed to reciprocate upward, downward, leftward, and rightward in the scanning region. Thus, even in a case where TL > TF is set, the image of one frame can be drawn in the entire scanning region. For example, in a case where TL = 2 × TF is set, the image of one frame is drawn on the scanning path of half of the Lissajous scanning, and thus the resolution of the image displayed in one frame period TF is decreased to half. However, the image is displayed in the entire scanning region. Accordingly, in the Lissajous scanning, setting TL > TF can quickly rewrite the image and can smoothly display a video of a fast motion. In addition, in the Lissajous scanning, since the scanning is densely performed in the scanning region in one scanning period TL, a video of a small motion that is similar to a still image can be accurately displayed.

### [Fourth Embodiment]

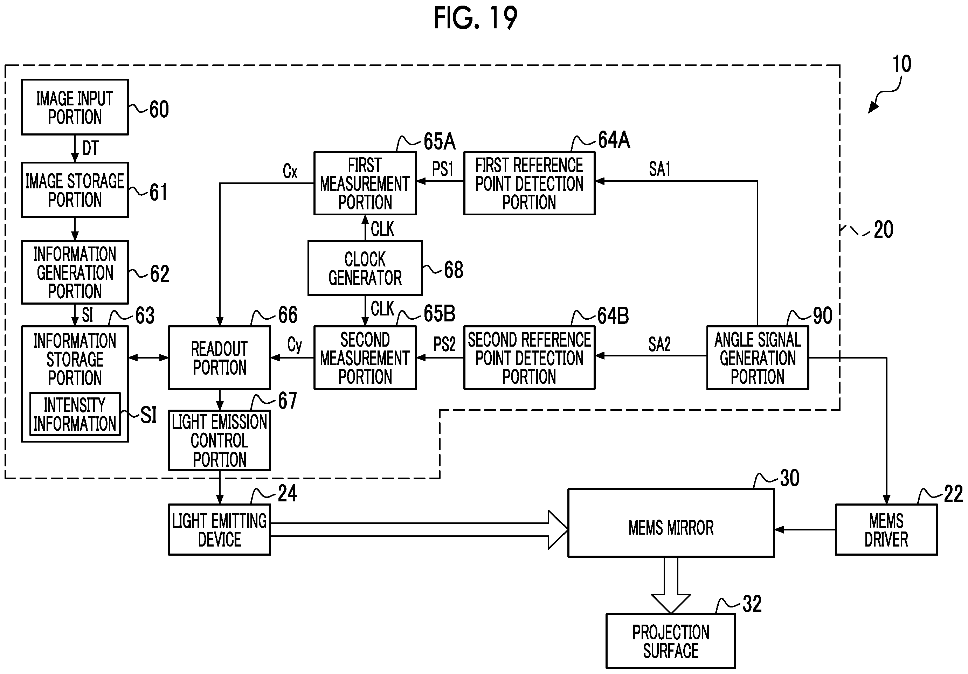

Next, a fourth embodiment will be described. While the first reference point detection portion 64A and the second reference point detection portion 64B in the control device 20 according to the first embodiment generate the first reference point P1 and the second reference point P2 based on the first angle signal SA1 and the second angle signal SA2, respectively, the first angle signal SA1 and the second angle signal SA2 may not be generated by the first angle sensor 34 and the second angle sensor 36. In the fourth embodiment, as illustrated in Fig. 19, an angle signal generation portion 90 that generates the first angle signal SA1 and the second angle signal SA2 is provided in the control device 20.

The angle signal generation portion 90 generates the first angle signal SA1 and the second angle signal SA2 by performing operation processing of estimating the deflection angle of the mirror portion 40 about the first axis a₁ and the deflection angle of the mirror portion 40 about the second axis a₂ based on the driving signal for driving the MEMS mirror 30 via the MEMS driver 22. The angle signal generation portion 90 supplies the generated first angle signal SA1 and the generated second angle signal SA2 to the first reference point detection portion 64A and the second reference point detection portion 64B, respectively. The angle signal generation portion 90 may generate the first angle signal SA1 and the second angle signal SA2 using a trained model that is trained by machine learning. In the present embodiment, the first angle sensor 34 and the second angle sensor 36 may not be provided in the MEMS mirror 30.

The embodiments can be appropriately combined with each other without contradiction.

In the embodiments, for example, the following various processors can be used as a hardware structure of a processing unit that executes various processing of the image input portion 60, the image storage portion 61, the information generation portion 62, the information storage portion 63, the first reference point detection portion 64A, the second reference point detection portion 64B, the first measurement portion 65A, the second measurement portion 65B, the readout portion 66, the light emission control portion 67, and the angle signal generation portion 90. The various processors include, in addition to a central processing unit (CPU) that is a general-purpose processor functioning as various processing units by executing software (program), a programmable logic device (PLD) such as the FPGA that is a processor having a circuit configuration changeable after manufacture, a dedicated electric circuit such as an application specific integrated circuit (ASIC) that is a processor having a circuit configuration dedicatedly designed to execute specific processing, and the like.

One processing unit may be composed of one of the various processors or may be composed of a combination of two or more processors of the same type or different types (for example, a combination of a plurality of FPGAs and/or a combination of a CPU and an FPGA). In addition, a plurality of processing units may be composed of one processor.

The image input portion 60 may be an image input processor. The image storage portion 61 may be a memory for image storage. The information generation portion 62 may be an information generation processor. The information storage portion 63 may be a memory for information storage. The first reference point detection portion 64A may be a first reference point detection processor. The second reference point detection portion 64B may be a second reference point detection processor. The first measurement portion 65A may be a first measurement processor. The second measurement portion 65B may be a second measurement processor. The readout portion 66 may be a readout processor. The light emission control portion 67 may be a light emission control processor. The angle signal generation portion 90 may be an angle signal generation processor. These processing units may be composed of one processor.

Examples of the plurality of processing units composed of one processor include, first, as represented by a computer such as a client and a server, a form in which one processor is composed of a combination of one or more CPUs and software, and the processor functions as the plurality of processing units. Second, as represented by a system on chip (SoC) or the like, a form of using a processor that implements functions of the entire system including the plurality of processing units via one integrated circuit (IC) chip is included. **In** such a manner, various processing units are configured using one or more of the various processors as a hardware structure.

Furthermore, more specifically, an electric circuit (circuitry) in which circuit elements such as semiconductor elements are combined can be used as the hardware structure of the various processors.

## Claims

1. A control device that controls a light scanning device which performs Lissajous scanning of light by irradiating a movable mirror which swings about a first axis and about a second axis, with light which is subjected to intensity modulation in accordance with an input image, the control device comprising:
a first measurement portion (65A) that measures, as a first elapsed time, an elapsed time from a first reference point at which a deflection angle of the movable mirror about the first axis becomes equal to a first reference angle;
a second measurement portion (65B) that measures, as a second elapsed time, an elapsed time from a second reference point at which a deflection angle of the movable mirror about the second axis becomes equal to a second reference angle;
an information storage portion (63) in which intensity information representing a correspondence relationship between the first elapsed time and the second elapsed time, and a signal intensity of the input image is stored;
a readout portion (66) that reads out the signal intensity corresponding to the first elapsed time measured by the first measurement portion and to the second elapsed time measured by the second measurement portion from the information storage portion; and
a light emission control portion (67) that causes a light emitting device to perform the intensity modulation of the light based on the signal intensity read out by the readout portion.

2. The control device according to claim 1,
wherein the first measurement portion and the second measurement portion measure the first elapsed time and the second elapsed time, respectively, by counting a clock signal output from a clock generator.

3. The control device according to claim 1 or 2, further comprising:
a first reference point detection portion that detects the first reference point; and
a second reference point detection portion that detects the second reference point.

4. The control device according to claim 3,
wherein the light scanning device includes a first angle sensor that outputs a first angle signal corresponding to the deflection angle of the movable mirror about the first axis, and a second angle sensor that outputs a second angle signal corresponding to the deflection angle of the movable mirror about the second axis,
the first reference point detection portion detects the first reference point based on the first angle signal output from the first angle sensor, and
the second reference point detection portion detects the second reference point based on the second angle signal output from the second angle sensor.

5. The control device according to any one of claims 1 to 4,
wherein the intensity information represents a correspondence relationship between a combination of the first elapsed time and the second elapsed time, and the signal intensity of the input image.

6. The control device according to claim 3, further comprising:
a scanning path changing portion that changes a scanning path of the Lissajous scanning by changing a frequency of at least one of the swing of the movable mirror about the first axis or the swing of the movable mirror about the second axis.

7. The control device according to claim 3, further comprising:
a scanning path changing portion that changes a scanning path of the Lissajous scanning by changing a phase difference between the swing of the movable mirror about the first axis and the swing of the movable mirror about the second axis.

8. The control device according to claim 3, further comprising:
a scanning path changing portion that changes a scanning path of the Lissajous scanning by changing an amplitude of at least one of the swing of the movable mirror about the first axis or the swing of the movable mirror about the second axis.

9. The control device according to claim 3, further comprising:
a scanning path changing portion that changes a scanning path of the Lissajous scanning based on a combination of at least two of
changing a frequency of at least any one of the swing of the movable mirror about the first axis or the swing of the movable mirror about the second axis,
changing a phase difference between the swing of the movable mirror about the first axis and the swing of the movable mirror about the second axis, and
changing an amplitude of at least any one of the swing of the movable mirror about the first axis or the swing of the movable mirror about the second axis.

10. The control device according to any one of claims 1 to 9,
wherein a scanning period of the Lissajous scanning is longer than a frame period of the input image.

11. An image forming apparatus comprising:
the control device according to any one of claims 1 to 10;
the light scanning device; and
the light emitting device.

12. A control method of controlling a light scanning device which performs Lissajous scanning of light by irradiating a movable mirror which swings about a first axis and about a second axis, with light which is subjected to intensity modulation in accordance with an input image, the control method comprising:
first measurement processing of measuring, as a first elapsed time, an elapsed time from a first reference point at which a deflection angle of the movable mirror about the first axis becomes equal to a first reference angle;
second measurement processing of measuring, as a second elapsed time, an elapsed time from a second reference point at which a deflection angle of the movable mirror about the second axis becomes equal to a second reference angle;
readout processing of reading out, from an information storage portion in which intensity information representing a correspondence relationship between the first elapsed time and the second elapsed time, and a signal intensity of the input image is stored, the signal intensity corresponding to the first elapsed time measured by the first measurement processing and to the second elapsed time measured by the second measurement processing; and
light emission control processing of causing a light emitting device to perform the intensity modulation of the light based on the signal intensity read out by the readout processing.

## Patentansprüche

1. Steuervorrichtung, die eine Lichtabtastvorrichtung steuert, die Lissajous-Abtastung von Licht durch Bestrahlen eines beweglichen Spiegels, der um eine erste Achse und um eine zweite Achse schwingt, mit Licht, das in Übereinstimmung mit einem Eingabebild Intensitätsmodulation unterzogen wird, durchführt, wobei die Steuervorrichtung umfasst:
einen ersten Messabschnitt (65A), der als eine erste verstrichene Zeit eine verstrichene Zeit ab einem ersten Referenzpunkt, an dem ein Ablenkungswinkel des beweglichen Spiegels um die erste Achse gleich einem ersten Referenzwinkel wird, misst;
einen zweiten Messabschnitt (65B), der als eine zweite verstrichene Zeit eine verstrichene Zeit ab einem zweiten Referenzpunkt, an dem ein Ablenkungswinkel des beweglichen Spiegels um die zweite Achse gleich einem zweiten Referenzwinkel wird, misst;
einen Informationsspeicherabschnitt (63), in dem Intensitätsinformationen, die eine Korrespondenzbeziehung zwischen der ersten verstrichenen Zeit und der zweiten verstrichenen Zeit und eine Signalintensität des Eingabebildes darstellen, gespeichert werden;
einen Ausleseabschnitt (66), der die Signalintensität, die der ersten verstrichenen Zeit, die von dem ersten Messabschnitt gemessen wird, und der zweiten verstrichenen Zeit, die von dem zweiten Messabschnitt gemessen wird, entspricht, aus dem Informationsspeicherabschnitt ausliest; und
einen Lichtemissions-Steuerabschnitt (67), der eine lichtemittierende Vorrichtung veranlasst, die Intensitätsmodulation des Lichts auf der Grundlage der von dem Ausleseabschnitt ausgelesenen Signalintensität durchzuführen.

2. Steuervorrichtung nach Anspruch 1,
wobei der erste Messabschnitt und der zweite Messabschnitt entsprechend die erste verstrichene Zeit und die zweite verstrichene Zeit durch Zählen eines von einem Taktgenerator ausgegebenen Taktsignals messen.

3. Steuervorrichtung nach Anspruch 1 oder 2, ferner umfassend:
einen ersten Referenzpunkt-Detektionsabschnitt, der den ersten Referenzpunkt detektiert; und
einen zweiten Referenzpunkt-Detektionsabschnitt, der den zweiten Referenzpunkt detektiert.

4. Steuervorrichtung nach Anspruch 3,
wobei die Lichtabtastvorrichtung einen ersten Winkelsensor, der ein erstes Winkelsignal ausgibt, das dem Ablenkungswinkel des beweglichen Spiegels um die erste Achse entspricht, und einen zweiten Winkelsensor, der ein zweites Winkelsignal ausgibt, das dem Ablenkungswinkel des beweglichen Spiegels um die zweite Achse entspricht, enthält,
der erste Referenzpunkt-Detektionsabschnitt den ersten Referenzpunkt auf der Grundlage des ersten Winkelsignals, das von dem ersten Winkelsensor ausgegeben wird, detektiert, und
der zweite Referenzpunkt-Detektionsabschnitt den zweiten Referenzpunkt auf der Grundlage des zweiten Winkelsignals, das von dem zweiten Winkelsensor ausgegeben wird, detektiert.

5. Steuervorrichtung nach einem der Ansprüche 1 bis 4,
wobei die Intensitätsinformationen eine Korrespondenzbeziehung zwischen einer Kombination der ersten verstrichenen Zeit und der zweiten verstrichenen Zeit und die Signalintensität des Eingabebildes darstellen.

6. Steuervorrichtung nach Anspruch 3, ferner umfassend:
einen Abschnitt zum Ändern von Abtastweg, der einen Abtastweg der Lissajous-Abtastung ändert, indem er eine Frequenz von mindestens einer von der Schwingung des beweglichen Spiegels um die erste Achse und der Schwingung des beweglichen Spiegels um die zweite Achse ändert.

7. Steuervorrichtung nach Anspruch 3, ferner umfassend:
einen Abschnitt zum Ändern von Abtastweg, der einen Abtastweg der Lissajous-Abtastung ändert, indem er eine Phasendifferenz zwischen der Schwingung des beweglichen Spiegels um die erste Achse und der Schwingung des beweglichen Spiegels um die zweite Achse ändert.

8. Steuervorrichtung nach Anspruch 3, ferner umfassend:
einen Abschnitt zum Ändern von Abtastweg, der einen Abtastweg der Lissajous-Abtastung ändert, indem er eine Amplitude von mindestens einer von der Schwingung des beweglichen Spiegels um die erste Achse und der Schwingung des beweglichen Spiegels um die zweite Achse ändert.

9. Steuervorrichtung nach Anspruch 3, ferner umfassend:
einen Abschnitt zum Ändern von Abtastweg, der einen Abtastweg der Lissajous-Abtastung ändert, auf der Grundlage einer Kombination aus mindestens zwei von Ändern einer Frequenz von mindestens einer von der Schwingung des beweglichen Spiegels um die erste Achse und der Schwingung des beweglichen Spiegels um die zweite Achse,
Ändern einer Phasendifferenz zwischen der Schwingung des beweglichen Spiegels um die erste Achse und der Schwingung des beweglichen Spiegels um die zweite Achse, und
Ändern einer Amplitude von mindestens einer von der Schwingung des beweglichen Spiegels um die erste Achse und der Schwingung des beweglichen Spiegels um die zweite Achse.

10. Steuervorrichtung nach einem der Ansprüche 1 bis 9,
wobei eine Abtastperiode der Lissajous-Abtastung länger als eine Einzelbildperiode des Eingabebildes ist.

11. Bilderzeugungsvorrichtung, umfassend:
die Steuervorrichtung nach einem der Ansprüche 1 bis 10;
die Lichtabtastvorrichtung; und
die lichtemittierende Vorrichtung.

12. Steuerverfahren des Steuerns einer Lichtabtastvorrichtung, die Lissajous-Abtastung von Licht durch Bestrahlen eines beweglichen Spiegels, der um eine erste Achse und um eine zweite Achse schwingt, mit Licht, das in Übereinstimmung mit einem Eingabebild Intensitätsmodulation unterzogen wird, durchführt, wobei das Steuerverfahren umfasst:
erste Messverarbeitung des Messens, als eine erste verstrichene Zeit, einer verstrichenen Zeit ab einem ersten Referenzpunkt, an dem ein Ablenkungswinkel des beweglichen Spiegels um die erste Achse gleich einem ersten Referenzwinkel wird;
zweite Messverarbeitung des Messens, als eine zweite verstrichene Zeit, einer verstrichenen Zeit ab einem zweiten Referenzpunkt, an dem ein Ablenkungswinkel des beweglichen Spiegels um die zweite Achse gleich einem zweiten Referenzwinkel wird;
Ausleseverarbeitung des Auslesens aus einem Informationsspeicherabschnitt, in dem Intensitätsinformationen, die eine Korrespondenzbeziehung zwischen der ersten verstrichenen Zeit und der zweiten verstrichenen Zeit und eine Signalintensität des Eingabebildes darstellen, gespeichert sind, wobei die Signalintensität der von der ersten Messverarbeitung gemessenen ersten verstrichenen Zeit und der von der zweiten Messverarbeitung gemessenen zweiten verstrichenen Zeit entspricht; und Lichtemissions-Steuerungsverarbeitung des Veranlassens einer lichtemittierenden Vorrichtung, die Intensitätsmodulation des Lichts auf der Grundlage der von der Ausleseverarbeitung ausgelesenen Signalintensität durchzuführen.

## Revendications

1. Dispositif de contrôle qui contrôle un dispositif de balayage de lumière qui effectue un balayage de Lissajous de lumière en irradiant un miroir mobile qui oscille autour d'un premier axe et autour d'un deuxième axe, avec de la lumière qui est soumise à une modulation d'intensité conformément à une image d'entrée, le dispositif de contrôle comprenant :
une première portion de mesure (65A) qui mesure, en tant que premier temps écoulé, un temps écoulé à partir d'un premier point de référence auquel un angle de déviation du miroir mobile autour du premier axe devient égal à un premier angle de référence ;
une deuxième portion de mesure (65B) qui mesure, en tant que deuxième temps écoulé, un temps écoulé à partir d'un deuxième point de référence auquel un angle de déviation du miroir mobile autour du deuxième axe devient égal à un deuxième angle de référence ;
une portion de stockage d'informations (63) dans laquelle des informations d'intensité représentant une relation de correspondance entre le premier temps écoulé et le deuxième temps écoulé, et une intensité de signal de l'image d'entrée sont stockées ;
une portion de lecture (66) qui lit l'intensité de signal correspondant au premier temps écoulé mesuré par la première portion de mesure et au deuxième temps écoulé mesuré par la deuxième portion de mesure à partir de la portion de stockage d'informations ; et
une portion de contrôle d'émission de lumière (67) qui amène un dispositif d'émission de lumière à effectuer la modulation d'intensité de la lumière sur la base de l'intensité de signal lue par la portion de lecture.

2. Dispositif de contrôle selon la revendication 1,
dans lequel la première portion de mesure et la deuxième portion de mesure mesurent respectivement le premier temps écoulé et le deuxième temps écoulé en comptant un signal d'horloge émis par un générateur d'horloge.

3. Dispositif de contrôle selon la revendication 1 ou la revendication 2, comprenant en outre :
une première portion de détection de point de référence qui détecte le premier point de référence ; et
une deuxième portion de détection de point de référence qui détecte le deuxième point de référence.

4. Dispositif de contrôle selon la revendication 3,
dans lequel le dispositif de balayage de lumière inclut un premier capteur d'angle qui émet un premier signal d'angle correspondant à l'angle de déviation du miroir mobile autour du premier axe, et un deuxième capteur d'angle qui émet un deuxième signal d'angle correspondant à l'angle de déviation du miroir mobile autour du deuxième axe,
la première portion de détection de point de référence détecte le premier point de référence sur la base du premier signal d'angle émis par le premier capteur d'angle, et la deuxième portion de détection de point de référence détecte le deuxième point de référence sur la base du deuxième signal d'angle émis par le deuxième capteur d'angle.

5. Dispositif de contrôle selon l'une quelconque des revendications 1 à 4,
dans lequel les informations d'intensité représentent une relation de correspondance entre une combinaison du premier temps écoulé et du deuxième temps écoulé, et l'intensité de signal de l'image d'entrée.

6. Dispositif de contrôle selon la revendication 3, comprenant en outre :
une portion de changement de trajet de balayage qui change un trajet de balayage du balayage de Lissajous en changeant une fréquence d'au moins l'un de l'oscillation du miroir mobile autour du premier axe ou de l'oscillation du miroir mobile autour du deuxième axe.

7. Dispositif de contrôle selon la revendication 3, comprenant en outre :
une portion de changement de trajet de balayage qui change un trajet de balayage du balayage de Lissajous en changeant une différence de phase entre l'oscillation du miroir mobile autour du premier axe et l'oscillation du miroir mobile autour du deuxième axe.

8. Dispositif de contrôle selon la revendication 3, comprenant en outre :
une portion de changement de trajet de balayage qui change un trajet de balayage du balayage de Lissajous en changeant une amplitude d'au moins l'un de l'oscillation du miroir mobile autour du premier axe ou de l'oscillation du miroir mobile autour du deuxième axe.

9. Dispositif de contrôle selon la revendication 3, comprenant en outre :
une portion de changement de trajet de balayage qui change un trajet de balayage du balayage de Lissajous sur la base d'une combinaison d'au moins deux de changer une fréquence d'au moins l'un quelconque de l'oscillation du miroir mobile autour du premier axe ou de l'oscillation du miroir mobile autour du deuxième axe, changer une différence de phase entre l'oscillation du miroir mobile autour du premier axe et l'oscillation du miroir mobile autour du deuxième axe, et
changer une amplitude d'au moins l'un quelconque de l'oscillation du miroir mobile autour du premier axe ou de l'oscillation du miroir mobile autour du deuxième axe.

10. Dispositif de contrôle selon l'une quelconque des revendications 1 à 9,
dans lequel une période de balayage du balayage de Lissajous est plus longue qu'une période de trame de l'image d'entrée.

11. Appareil de formation d'images comprenant :
le dispositif de contrôle selon l'une quelconque des revendications 1 à 10 ;
le dispositif de balayage de lumière ; et
le dispositif d'émission de lumière.

12. Procédé de contrôle pour contrôler un dispositif de balayage de lumière qui effectue un balayage de Lissajous de lumière en irradiant un miroir mobile qui oscille autour d'un premier axe et autour d'un deuxième axe, avec de la lumière qui est soumise à une modulation d'intensité conformément à une image d'entrée, le procédé de contrôle comprenant :
première traitement de mesure consistant à mesurer, en tant que premier temps écoulé, un temps écoulé à partir d'un premier point de référence auquel un angle de déviation du miroir mobile autour du premier axe devient égal à un premier angle de référence ;
deuxième traitement de mesure consistant à mesurer, en tant que deuxième temps écoulé, un temps écoulé à partir d'un deuxième point de référence auquel un angle de déviation du miroir mobile autour du deuxième axe devient égal à un deuxième angle de référence ;
traitement de lecture consistant à lire, à partir d'une portion de stockage d'informations dans laquelle des informations d'intensité représentant une relation de correspondance entre le premier temps écoulé et le deuxième temps écoulé, et une intensité de signal de l'image d'entrée sont stockées, l'intensité de signal correspondant au premier temps écoulé mesuré par le premier traitement de mesure et au deuxième temps écoulé mesuré par le deuxième traitement de mesure ; et
traitement de contrôle d'émission de lumière consistant à amener un dispositif d'émission de lumière à effectuer la modulation d'intensité de la lumière sur la base de l'intensité de signal lue par le traitement de lecture.
